# FASCICULE DE BREVET EUROPEEN

(11) **EP 0 760 824 B1**
(45) Date de publication et mention de la délivrance du brevet: **21.04.1999**
(21) Numéro de dépôt: 96903043.6
(22) Date de dépôt: 02.02.1996
(51) Int. Cl.: C08F 4/00

(54) **POLYMERISATION EN PRESENCE D'UN RADICAL NITROXYDE BETA-SUBSTITUE**
POLYMERISATION IN GEGENWART VON EINEM BETA-SUBSTITUIERTEM NITROXYD-RADIKAL
POLYMERISATION IN THE PRESENCE OF A BETA-SUBSTITUTED NITROXIDE RADICAL

(30) Priorité: 07.02.1995 FR 9501380; 13.06.1995 FR 9506967
(43) Date de publication de la demande: 12.03.1997
(60) Demande divisionnaire: 97120435.9
(73) Titulaire: ELF ATOCHEM S.A., 92800 Puteaux, Hauts-de-Seine (FR)
(72) Inventeur: GRIMALDI, Sandra, F-13090 Aix-en-Provence (FR); LEMOIGNE, François, F-13012 Marseille (FR); FINET, Jean-Pierre, F-13280 Raphele-les-Arles (FR); TORDO, Paul, F-13004 Marseille (FR); NICOL, Pascal, F-64000 Pau (FR); PLECHOT, Muriel, F-64300 Orthez (FR); GNANOU, Yves, 33400 Talence (FR)
(86) Numéro de dépôt international: FR9600180
(87) Numéro de publication internationale: WO9624620

(56) Documents cités:
- EP-A- 0 035 291
- EP-A- 0 135 280
- US-A- 2 768 156
- US-A- 5 412 047

## Description

### DOMAINE TECHNIQUE :

L'invention conceme un procédé de polymérisation ou copolymérisation d'au moins un monomère polymérisable par voie radicalaire en présence d'un radical libre stable de la famille des nitroxydes.

### TECHNIQUE ANTERIEURE:

La présence d'un radical libre stable lors de la polymérisation ou copolymérisation de monomères procure un contrôle de la polymérisation et mène à des polymères à la polydispersité plus resserrée.

La qualité d'un contrôle de polymérisation ou copolymérisation peut également être appréciée par l'observation de l'augmentation de la masse moléculaire moyenne en nombre en fonction du pourcentage de conversion des monomères en polymère ou copolymère. Lorsque le contrôle est bon, la masse moléculaire moyenne en nombre est linéairement proportionnelle au pourcentage de conversion. Plus on s'écarte de la linéarité, moins le contrôle est bon.
Le brevet US 4,581,429 décrit un procédé de fabrication d'oligomères à basse température et avec des faibles taux de conversion, faisant usage d'un composé de formule = N - O - X dans le milieu de polymérisation.

Les brevets US 5 322 912 et US 5 401 804 illustrent l'action de radicaux libres stables sur la polymérisation du styrène. Le brevet US 5 412 047 illustre l'action de radicaux libres stables sur la polymérisation des acrylates. Le brevet US 5 449 724 illustre l'action de radicaux libres stables sur la polymérisation de l'éthylène. Les documents qui viennent d'être cités mentionnent comme radicaux libres stables des molécules cycliques lesquelles présentent en β de l'atome d'azote du groupement nitroxyde un groupement de faible masse moléculaire, lesdites molécules présentant notamment l'inconvénient de ralentir considérablement la vitesse de polymérisation ou copolymérisation, de sorte qu'il est parfois difficile voire impossible de mener cette polymérisation ou copolymérisation à une température suffisamment basse pour que la polydispersité du polymère final soit suffisamment resserrée.

En effet, plus la température du milieu est élevée, moins le contrôle de la polymérisation ou copolymérisation est bon, de sorte que le polymère ou copolymère final présente une plus forte polydispersité.

### EXPOSE DE L'INVENTION :

L'invention pallie aux inconvénients ci-dessus évoqués. Les radicaux libres stables mis en jeu dans le cadre de la présente invention procurent un excellent contrôle de la polydispersité tout en assurant une meilleure vitesse de polymérisation ou copolymérisation, si on les compare avec les radicaux libres stables mis en oeuvre par l'art antérieur.

Un autre avantage de l'invention est de permettre la préparation de copolymères à blocs. En effet, la polymérisation d'un premier monomère en présence d'un radical libre stable mène à un bloc de polymère vivant. Il est alors possible d'accoler à ce premier bloc un bloc d'un autre polymère en plaçant le premier bloc de polymère viant dans un milieu de polymérisation d'une second monomère. Il est ainsi possible de réaliser des copolymères à blocs, par exemple, des copolymères comprenant un ou plusieurs blocs de polystyrène et un ou plusieurs blocs de polybutadiène. La préparation de tels copolymères est habituellement très difficile par les voies radicalaires de l'art antérieur et, pour leur préparaiton, il est généralement fait appel aux procédés de copolymérisation par voie anionique.

La réalisation de tels copolymères par voie radicalaire nécessite un bon contrôle de la polymérisation de chacun des blocs. En effet, si une réaction de terminaison vient interrompre la croissance par polymérisation d'un bloc, il ne sera pas possible de lui accoler un bloc d'un autre monomère. Les réactions de terminaison doivent donc être le moins fréquentes possible. Il y a moins de réactions de terminaisons lorsqu'au cours de la polymérisation, la masse moléculaire moyenne en nombre est mieux linéairement proportionnelle au pourcentage de conversion. L'existence de réactions de terminaison se traduit par une diminution de la vitesse d'augmentation de la masse moléculaire moyenne en nombre en fonciton du pourcentage de conversion.

L'invention concerne la polymérisation ou copolymérisation d'au moins un monomère polymérisable en présence d'un radical libre stable de la famille des nitroxydes comprenant un enchaînement de formule : 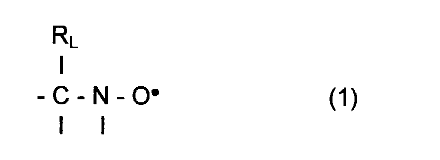 dans laquelle le radical R_{L} présente une masse molaire supérieure à 15. Le radical R_{L}, monovalent, est dit en position β par rapport à l'atome d'azote du radical nitroxyde. Les valences restantes de l'atome de carbone et de l'atome d'azote dans la formule (1) peuvent être liées à des radicaux divers tels qu'un atome d'hydrogène, un radical hydrocarboné comme un radical alkyle, aryle ou aralkyle, comprenant de 1 à 10 atomes de carbone. Il n'est pas exclu que l'atome de carbone et l'atome d'azote dans la formule (1) soient reliés entre eux par l'intermédiaire d'un radical bivalent, de façon à former un cycle. De préférence cependant, les valences restantes de l'atome de carbone et de l'atome d'azote de la formule (1) sont liées à des radicaux monovalents. De préférence, le radical R_{L} présente une masse molaire supérieure à 30. Le radical R_{L} peut par exemple avoir une masse molaire comprise entre 40 et 450. A titre d'exemple, le radical R_{L} peut être un radical comprenant un groupement phosphoryle, ledit radical R_{L} pouvant être représenté par la formule : 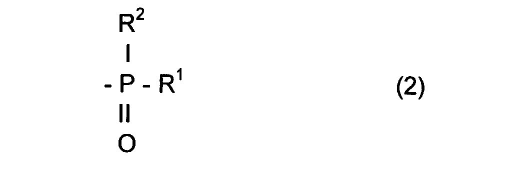 dans laquelle R¹ et R² , pouvant être identiques ou différents, peuvent être choisis parmi les radicaux alkyle, cycloalkyle, alkoxyle, aryloxyle, aryle, aralkyloxyle, perfluoroalkyle, aralkyle, et peuvent comprendre de un à 20 atomes de carbone. R¹ et/ou R² peuvent également être un atome d'halogène comme un atome de chlore ou de brome ou de fluor ou d'iode. Le radical R_{L} peut également comprendre au moins un cycle aromatique comme pour le radical phényle ou le radical naphtyle, ce dernier pouvant être substitué, par exemple par un radical alkyle comprenant de un à quatre atomes de carbone.

A titre d'exemple, le radical libre stable peut être choisi dans la liste suivante :
N-tertiobutyl-1-phényl-2 méthyl propyl nitroxyde,
N-tertiobutyl-1-(2-naphtyl)-2-méthyl propyl nitroxyde,
N-tertiobutyl-1-diéthylphosphono-2,2-diméthyl propyl nitroxyde,
N-tertiobutyl-1-dibenzylphosphono-2,2-diméthyl propyl nitroxyde,
N-phényl -1-diéthyl phosphono-2,2-diméthyl propyl nitroxyde,
N-phényl-1-diéthyl phosphono-1-méthyl éthyl nitroxyde,
N-(1-phényl 2-méthyl propyl)-1-diéthylphosphono-1-méthyl éthyl nitroxyde.

Le radical libre stable peut être introduit dans le milieu de polymérisation ou copolymérisation à raison de 0,005 % à 5 % en poids de la somme de la masse de monomère polymérisable et de radical libre stable.

Dans le cadre de la présente invention, tout monomère présentant une double liaison carbone-carbone susceptible de polymériser ou copolymériser par voie radicalaire, peut être utilisé.

Au moins un monomère présent dans le milieu de polymérisation ou copolymérisation peut être un monomère vinylaromatique ou une oléfine ou un diène ou un monomère acrylique ou méthacrylique. Le monomère peut également être le difluorure de vinylidène ou le chlorure de vinyle.

Par monomère vinylaromatique, on entend le styrène, le styrène substitué sur le groupement vinyle par un groupement alkyle tel que l'alpha-méthylstyrène ou l'ortho-vinyltoluène, le para-vinyltoluène, l'ortho-éthylstyrène, le 2,4-diméthylstyrène, le styrène substitué sur le cycle par un halogène comme par exemple le 2,4-dichlorostyrène ainsi que le vinylanthracène.

Par diène, on entend en particulier un diène conjugué comprenant de 4 à 8 atomes de carbone tel que le 1,3-butadiène, l'isoprène, le 2,3-diméthyl-1,3-butadiène, le pipérylène.

Le procédé selon l'invention est plus particulièrement efficace dans le cas des monomères vinylaromatiques et des diènes.

La polymérisation ou copolymérisation est réalisée dans les conditions habituelles connues de l'homme du métier compte tenu du ou des monomères considérés, du moment que cette polymérisation ou copolymérisation intervient par un mécanisme radicalaire, et à la différence que l'on ajoute au milieu le radical libre stable β-substitué, conformément à l'invention. Suivant la nature du ou des monomères que l'on souhaite polymériser ou copolymériser, il peut être nécessaire d'introduire dans le milieu de polymérisation ou copolymérisation un initiateur de radicaux libres. L'homme du métier connaît les monomères qui nécessitent la présence d'un tel initiateur pour que ce monomère polymérise ou copolymérise. Par exemple, la polymérisation ou copolymérisation d'un diène nécessite la présence d'un initiateur de radicaux libres.

L'initiateur de radicaux libres peut-être introduit dans le milieu de polymérisation ou copolymérisation à raison de 50 à 50 000 ppm sur la base de la masse de monomère polymérisable ou copolymérisable.

L'initiateur de radicaux libres peut par exemple être choisi parmi ceux de type peroxyde ou de type azo. on peut citer à titre d'exemple les initiateurs suivants : peroxyde de benzoyle, peroxyde de lauroyle, peracétate de tert-butyle, perpivalate de tert-amyle, per-2-éthylhexanoate de butyle, perpivalate de tert-butyle, pernéodécanoate de tert-butyle, perisononanoate de tert-butyle, peméodécanoate de tert-amyle, perbenzoate de tert-butyle, peroxydicarbonate de di-2-ethylhexyle, peroxydicarbonate de dicyclohexyle, peméodecanoate de cumyle, permaléate de tert-butyle, 2,2'-azobis(isobutyronitrile), 2,2'-azobis(2,4-diméthyl-valéronitrile), 2,2'-azobis(cydohexanenitrile), 2,2'-azobis-(2-méthylbutyronitrile), 2,2'-azobis(2,4-diméthyl-4-méthoxyvaléronitrile).

Dans le cas où le milieu comprend un monomère vinylaromatique et que l'on souhaite un excellent contrôle de la croissance du polymère ou copolymère de façon à ce que ce demier soit de polydispersité particulièrement étroite, il est préférable de mener la polymérisation ou copolymérisation à une température à laquelle aucune polymérisation ou copolymérisation n'est observée en l'absence d'initiateur de radicaux libres, et d'ajouter un initiateur de radicaux libres dans le milieu. Par exemple, dans le cas de la polymérisation ou copolymérisation d'au moins un monomère vinylaromatique, on est dans cette situation lorsque la température est inférieure à environ 120°C. Des vitesses appréciables de polymérisation ou copolymérisation sont néanmoins obtenues par le procédé de l'invention lorsque la température est comprise entre 90 et 120°C, par exemple entre 100 et 120° C, et que l'on a ajouté un initiateur de radicaux libre au milieu.

Néanmoins, si l'on accepte une polydispersité plus élevée, il n'est pas exclu de chauffer le milieu à de plus fortes températures.

Ainsi, dans le cas où le milieu comprend un monomère vinylaromatique, la polymérisation ou copolymérisation peut être initiée thermiquement et sans initiateur de radicaux libres, auquel cas elle est généralement conduite entre 120 et 200°C et de préférence entre 120 et 160°C. Si un initiateur de radicaux libres a été introduit, il est possible de réaliser la polymérisation ou copolymérisation entre 25 et 120°C mais on peut également, suivant la nature de l'initiateur et en particulier sa température de demi-vie, chauffer jusqu'à 200°C, si l'on préfère une plus grande vitesse de polymérisation au détriment de la polydispersité.

Dans le cas où le milieu comprend un monomère vinylaromatique, la polymérisation ou copolymérisation peut être menée en masse, en suspension ou en solution.

Dans le cas d'un diène, la polymérisation ou copolymérisation est généralement réalisée en solution ou suspension. Le milieu de polymérisation ou copolymérisation peut être destiné à mener à un polymère vinylaromatique choc, auquel cas il comprend généralement au moins un monomère vinylaromatique et un caoutchouc, ce dernier étant généralement un polydiène conjugué tel qu'un ou plusieurs polybutadiènes.

L'invention concerne également la préparation de copolymères. Par exemple, lorsqu'au moins un monomère vinylaromatique est présent dans le milieu, on peut copolymériser ce monomère avec, par exemple, au moins un monomère choisi parmi l'acrylonitrile, le méthacrylonitrile, l'acide acrylique, l'acide méthacrylique, un ester d'alkyle dont le groupement alkyle contient de 1 à 4 atomes de carbone, un N-alkylmaléimide dont le groupement alkyle contient de 1 à 4 atomes de carbone, le N-phénylmaléimide.

Bien entendu, suivant les conditions de polymérisation ou copolymérisation, et en particulier la durée, la température, le degré de conversion de monomère en polymère ou copolymère, il est possible de réaliser des produits de masse moléculaire très différente.

L'invention conceme à la fois la préparation d'oligoméres, polymères ou copolymères de masse moléculaire moyenne en poids inférieure à 10 000, que celle de polymères ou copolymères de masse moléculaire moyenne en poids supérieure à 10 000, comme les hauts-polymères de masse moléculaire moyenne en poids allant généralement de 100 000 à 400 000.

L'invention concerne à la fois les procédés de polymérisation ou copolymérisation dont le taux de conversion de monomère en polymère ou copolymère est inférieur à 50 % que ceux dont le taux de conversion de monomère en polymère ou copolymère est supérieur à 50 %.

Le procédé de préparation de l'amine secondaire peut comprendre une étape de réaction entre :
- un composé C comprenant un groupement carbonyle,
- une amine primaire,
- un dérivé phosphoré comprenant un groupement phosphoryle.

Le composé C peut par exemple être représenté par la formule 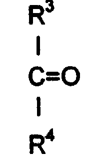 dans laquelle R³ et R⁴, pouvant être identiques ou différents, peuvent représenter divers radicaux tels qu'un atome d'hydrogène ou un radical alkyle, aryle ou aralkyle comprenant par exemple de 1 à 10 atomes de carbone. Les radicaux R³ et R⁴ peuvent également être reliés entre eux de façon à former un cycle incluant l'atome de carbone du groupement carbonyle. Le composé C peut être choisi parmi les aldéhydes ou les cétones.

A titre d'exemple, le composé C peut être :
- le triméthylacétaldéhyde,
- l'isobutyraldéhyde,
- la diéthylcétone,
- la dibutylcétone,
- la méthyléthylcétone
- la cyclohexanone,
- la 4-tertiobutylcyclohexanone,
- la tétralone.

L'amine primaire peut être représentée par la formule R⁵-NH₂ dans laquelle R⁵ peut représenter par exemple un radical hydrocarboné linéaire ou ramifié, saturé ou insaturé, pouvant comprendre au moins un cycle, ledit radical comprenant de 1 à 30 atomes de carbone, tel qu'un radical alkyle, aryle, aralkyle. A titre d'exemple, le radical R⁵ peut être choisi parmi les radicaux suivants : méthyle, éthyle, propyle, isopropyle, tertiobutyle, diphénylméthyle, triphénylméthyle, phényle, naphtyle, benzyle, phényl-1-éthyle.

Le dérivé phosphoré peut être représenté par la formule HP(O)(R⁶)(R⁷) dans laquelle R⁶ et R⁷, pouvant être identiques ou différents, peuvent être choisis parmi les radicaux alkyle, cycloalkyle, alkoxyle, aryloxyle, aryle, aralkyloxyle, perfluoroalkyle, aralkyle, et peuvent comprendre de un à 20 atomes de carbone. R⁶ et/ou R⁷ peuvent également être un atome d'halogène comme un atome de chlore ou de brome ou de fluor ou d'iode. A titre d'exemple, les radicaux R⁶ et R⁷ peuvent être choisis parmi les radicaux suivants : méthyle, éthyle, n-propyle, isopropyle, tertiobutyle, n-butyle, phényle, benzyle, méthoxyle, éthoxyle, trifluorométhyle, benzyloxyle.

A titre d'exemple, le dérivé phosphoré peut être : le phosphite de diéthyle, le phosphite de dibenzyle, le phosphite de diisopropyle, le phosphite de di-n-dodécyle, la diphénylphosphine oxyde, la dibenzylphosphine oxyde.

Pour la réaction, on met de préférence tout d'abord en contact le composé C et l'amine primaire, puis dans un deuxième temps, on ajoute le dérivé phosphoré.

L'étape de réaction peut être effectuée par exemple entre 0 et 100°C, et de préférence entre 20 et 60°C.

De préférence, le rapport molaire du dérivé phosphoré sur le composé C est supérieur à 1.

De préférence, le rapport molaire du composé C sur l'amine primaire va de 0,8 à 1,5.

A la suite de l'étape de réaction, le milieu contient une amine secondaire, également objet de la présente invention. Cette amine secondaire peut, si nécessaire, être isolée de toute façon appropriée.

En particulier, on peut acidifier le milieu par une solution aqueuse d'acide chlorhydrique pour former un chlorhydrate de l'amine secondaire, puis ajouter au milieu un solvant organique tel qu'un éther pour solubiliser les espèces à éliminer, puis isoler la phase aqueuse, puis ajouter dans cette phase aqueuse du carbonate de sodium pour libérer l'amine secondaire. Cette dernière est ensuite extraite par un solvant organique tel qu'un éther pour être ensuite isolée après évaporation du solvant.

L'amine secondaire peut être représentée par la formule : 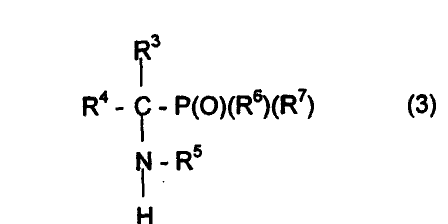 dans laquelle les radicaux R³, R⁴, R⁵, R⁶ et R⁷ conservent les significations précédemment données.

L'amine secondaire peut servir à la préparation d'un nitroxyde.

Le procédé de préparation de ce nitroxyde, comprend, après formation de l'amine secondaire, une étape d'oxydation de cette amine secondaire, capable de remplacer son groupement >N-H par un groupement >N-O_{•}. On liste ci-après, de façon non exhaustive quelques techniques appropriées :
- réaction de l'amine secondaire avec l'eau oxygénée, dont le principe est enseigné par la demande de brevet EP 0 488 403 ;
- réaction de l'amine secondaire avec le diméthyldioxirane suivant le principe enseigné dans R.W. Murray et M. Singh, Tetrahedron Letters, 1988, 29(37), 4677-4680 (ou US 5 087 752) ;
- réaction de l'amine secondaire avec l'acide métachloroperbenzoïque (MCPBA), selon le principe enseigné dans J. Am. Chem. Soc., 1967, 89(12), 3055-3056.

On peut également utiliser les techniques décrites dans les demandes de brevet EP 0 157 738 et GB 1 199 351.

Pour ce qui concerne la méthode d'oxydation au MCPBA, on préfère réaliser l'oxydation dans les conditions suivantes :
- rapport molaire de l'amine secondaire sur le MCPBA compris entre 0,5 et 1 et de manière encore préférée entre 0,8 et 1 ;
- température comprise entre -10 et 10°C,
- utilisation d'un solvant inerte de façon à pouvoir mieux contrôler l'exothermicité de la réaction. Ce solvant peut par exemple être choisi dans la famille des solvants chlorés comme le dichlorométhane, ou le chlroforme.

Le nitroxyde peut être représenté par la formule : 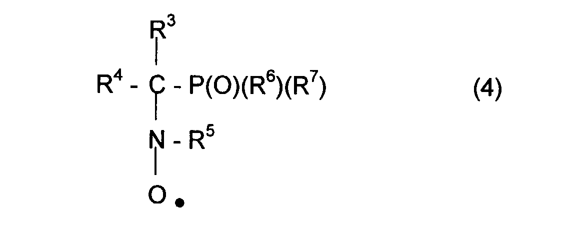 dans laquelle les radicaux R³, R⁴, R⁵, R⁶ et R⁷ conservent les significations précédemment données. A la suite de cette étape d'oxydation au MCPBA, le nitroxyde peut être purifié, par exemple par élution sur colonne de silice, puis isolé après évaporation des solvants éventuellement nécessaires. MANIERE DE REALISER L'INVENTION :

On donne ci-après la signification de quelques abréviations utilisées dans les exemples :
- Per. Benz. :: Peroxyde de Benzoyle
- AIBN :: 2,2'-azobis(isobutyronitrile)
- Tempo :: 2,2,6,6-tétraméthyl-1-piperidinyloxy
- DTBN :: di-tertiobutylnitroxyde

### Exemple 1

### a) Synthèse du 2,2-diméthyl-1-(1,1-diméthyléthyl-amino)propyl phosphonate de diéthyle

On mélange à la température ambiante sous atmosphère d'azote, dans un ballon bicol de 250 ml muni d'une agitation magnétique et d'une ampoule à addition 6,68 g (0,077 mole) de pivalaldéhyde et 5,62 g (0,077 mole) de tertiobutyl amine. Le mélange est ensuite porté à 30°C pendant une heure. Après retour à la température ambiante, on ajoute goutte à goutte au milieu 26,23 g (0,19 mole) de phosphite de diéthyle à la température ambiante. Le mélange est ensuite porté sous agitation à 40°C pendant 24 heures.

Après retour à la température ambiante, on ajoute 20 ml d'éther diéthylique et l'on refroidit à 10°C. On acidifie alors le milieu par une solution aqueuse à 5% en volume d'acide chlorhydrique, jusqu'à l'obtention d'un pH de 3 dans la phase aqueuse. On ajoute alors 120 ml d'éther diéthylique. On ajoute ensuite 10 g d'hydrogéno-carbonate de sodium pur, jusqu'à l'obtention d'un pH de 8 dans la phase aqueuse. On extrait ensuite l'amine par quatre extractions successives de 60 ml d'éther diéthylique chacune, puis on sèche la phase organique ainsi obtenue par environ 5 g de sulfate de sodium anhydre. Après filtration, on évapore le solvant à l'évaporateur rotatif à 40°C sous 1 mbar, puis à l'aide d'une rampe à vide à température ambiante sous 0,2 mbar. On a ainsi obtenu 19,36 g de 2,2-diméthyl-1-(1,1-diméthyléthylamine)propyl phosphonate de diéthyle. Les caractéristiques RMN de ce produit sont les suivantes :
RMN ¹H dans CDCl₃:
   0,99 ppm (s ; 9H ; tBu) ;
   1,06 ppm (s ; 9H ; tBu) ;
   1,28 ppm (t ; 6H ; J_{H-H} = 7,1Hz : CH₃);
   2,69 ppm (d ; 1H ; J_{H-P} = 17,9 Hz ; H en à du P) ;
   4,06 ppm (massif ; 4H ; J_{H-H} = 7,1Hz ; CH₂).
RMN ¹³C dans CDCl₃ :
   16,49 ppm (d ; J_{C-P} = 5,5Hz ; CH₃-CH₂) ;
   27,90 ppm (d ; J_{C-P} = 6,1Hz ; CH₃-C-C) ;
   30,74 ppm (s ; CH₃-C-N) ;
   35,24 ppm (d ; J_{C-P} = 9,6Hz ; CH₃-C-C) ;
   50,93 ppm (s ; CH₃-C-N) ;
   59,42 ppm (d ; J_{C-P} = 132,9Hz ; CH) ;
   61,39 ppm (d ; J_{C-P} = 7,1Hz ; CH₂).
RMN ³¹P dans CDCl₃:
   29,84 ppm.

### b) Synthèse du N-tertiobutyl-1-diéthylphosphono-2,2-diméthyl propyl nitroxyde

On dissout 2,28 g (0,0082 mole) de l'amine préparée au a) dans 5 ml de dichlorométhane, à température ambiante, puis on introduit la solution ainsi obtenue dans un ballon refroidi à 0°C et muni d'une agitation magnétique. On additionne au goutte à goutte une solution de 1,29 g (0,0075 mole) d'acide métachloroperbenzoïque (MCPBA) dans 5 ml de dichlorométhane. Après 6 heures d'agitation à température ambiante, on ajoute au mélange une solution aqueuse saturée de NaHCO₃ jusqu'à disparition du dégagement de CO₂, soit environ 30 ml de cette solution. On récupère la phase organique que l'on sèche par environ 5 g de sulfate de sodium. On élimine ensuite le solvant à l'évaporateur rotatif à 40°C sous 1 mbar puis à raide d'une rampe à vide à température ambiante sous 0,2 mbar. On obtient ainsi 1,39 g d'une huile orange. On purifie cette huile sur une colonne de diamètre de 4 cm et 30 cm de hauteur contenant 100 g de silice (silicagel 60, granulométrie 0,040-0,063 mm) en procédant comme suit : On prépare une suspension comprenant les 100 g de silice mélangés avec 200 ml d'un éluant constitué d'un mélange CH₂CL₂/THF/pentane dans les proportions volumiques de 1/1/2. La colonne est remplie de cette suspension et on laisse reposer une heure, puis l'on dépose en tête de colonne les 1,39 g d'huile orange sous la forme d'une solution à 80 % en volume dans l'éluant. Au moins 200 ml d'éluant sont nécessaires pour purifier le produit. Le liquide en pied de colonne est récupéré par fractions de 15 ml. On procède ensuite à l'élimination des espèces volatiles, tout d'abord à l'évaporateur rotatif à 40°C jusqu'à une pression résiduelle de 1 mbar puis à l'aide d'une rampe à vide à la température ambiante sous 0,2 mbar. On recueille finalement 1,06 g de N-tertiobutyl-1-diéthyl-phosphono-2,2-diméthyl propyl nitroxyde et dont la formule développée est :

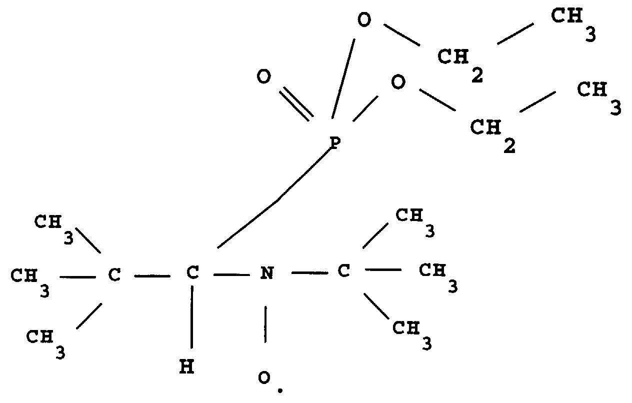

L'analyse élémentaire du produit final est conforme aux valeurs calculées. Les données RPE de ce produit sont les suivantes :
a_{P} = 45,26 G
a_{N} = 14,27 G
g = 2,0061 (facteur de Landé)

Ce radical est stable dans la mesure où son spectre RPE ne montre pas de modification sensible après un stockage de deux mois à 25°C.

Par souci de simplification, ce produit est appelé β-P.

### Exemple 2

### a) Synthèse du magnésien (CH₃)₂CH-MgBr

Dans un ballon bicol de 250 ml muni d'une agitation magnétique et d'un réfrigérant comprenant un piège à CaCl₂, on place 1 g (0,041 mole) de copeaux de magnésium recouverts de 10 ml d'éther diéthylique, puis un cristal (environ 5 mg) d'iode, ce dernier ayant pour fonction d'activer le magnésium et de démarrer la réaction.

On additionne ensuite au goutte à goutte et par l'intermédiaire d'une ampoule à addition 5,04 g de bromure d'isopropyle (0,041 mole)dilué dans 10 ml d'éther diéthylique. Le milieu est laissé sous agitation à la température ambiante pendant 3 heures.

### b) Préparation du N-tertiobutyl-1-phényl-2-méthyl propyl nitroxyde

Dans un ballon bicol de 100 ml muni d'une agitation magnétique et d'un réfrigérant, purgé à l'azote, on place 0,3 g de phényl-N-tertiobutylnitrone (PBN) soit 0,0017 mole, en solution dans 5 ml d'éther diéthylique. On verse ensuite au goutte à goutte, la solution du magnésien préparée au a). On ajoute ensuite 10 ml d'eau distillée, et le mélange est laissé sous agitation à la température ambiante pendant 2 heures. On procède alors à une extraction par 2 fois 20 ml d'éther diéthylique, puis la phase organique est séchée par 5 g de sulfate de sodium. Après filtration, on procède à une élimination des espèces volatiles de la solution organique à l'aide d'un évaporateur rotatif à 40°C jusqu'à 1 mbar, puis à l'aide d'une rampe à vide à température ambiante sous 0,2 mbar. On obtient ainsi 0,42 g d'un liquide jaune-orange. On procède ensuite à une purification sur silice identique à celle décrite à l'exemple 1b) sauf que l'éluant est un mélange pentane/acétone dans un rapport volumique de 90/10. Après évaporation de l'éluant de la même façon qu'à l'exemple 1b), on recueille 0,1 g de N-tertiobutyl-1-phényl-2-méthyl-propyl nitroxyde dont la formule développée est :

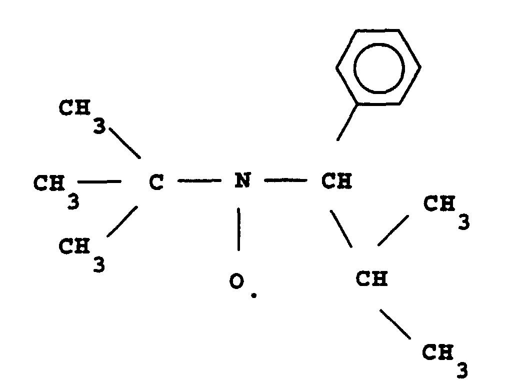

L'analyse élémentaire du produit final est conforme aux valeurs calculées. Les données RPE de ce produit sont les suivantes :
a_{N} = 15,21 G
a_{H} = 3,01 G.

Ce radical est stable dans la mesure où son spectre RPE ne montre pas de modification sensible après un stockage de deux mois à 25°C. Par souci de simplification, ce produit est appelé β-ϕ.

### Exemples 3 à 16

Dans un réacteur en acier inoxydable de 0,25 litre équipé d'un agitateur à ruban et d'une régulation de température, on introduit à 20°C et sous atmosphère d'azote, 150 g de styrène, y millimoles d'initiateur et x millimoles de radical libre stable. L'ensemble est porté à une température T (°C). L'instant auquel le mélange atteint la température T est défini comme l'instant de départ de l'essai.

On procède alors à des prélèvements au cours du temps pour analyse :
- de la conversion en polymère ("conv" dans les tableaux), qui correspond au pourcentage en poids de solide obtenu après évaporation sous un vide de 25 mbars pendant 20 minutes à 200°C de l'échantillon prélevé par rapport à son poids initial;
- de la masse moléculaire moyenne en poids (Mw) et en nombre (Mn) et donc de la polydispersité P laquelle est égale à Mw/Mn, ces déterminations étant réalisées par chromatographie à perméation de gel.

Les tableaux 1 et 2 rassemblent les résultats en fonction de la nature et des quantités x et y respectivement de radical libre stable et d'initiateur introduites. Les tableaux 1 et 2 donnent l'évolution de Mn, de la conversion et de la polydispersité en fonction de la durée de polymérisation à compter de l'instant initial. Les exemples 10 à 16 sont comparatifs.

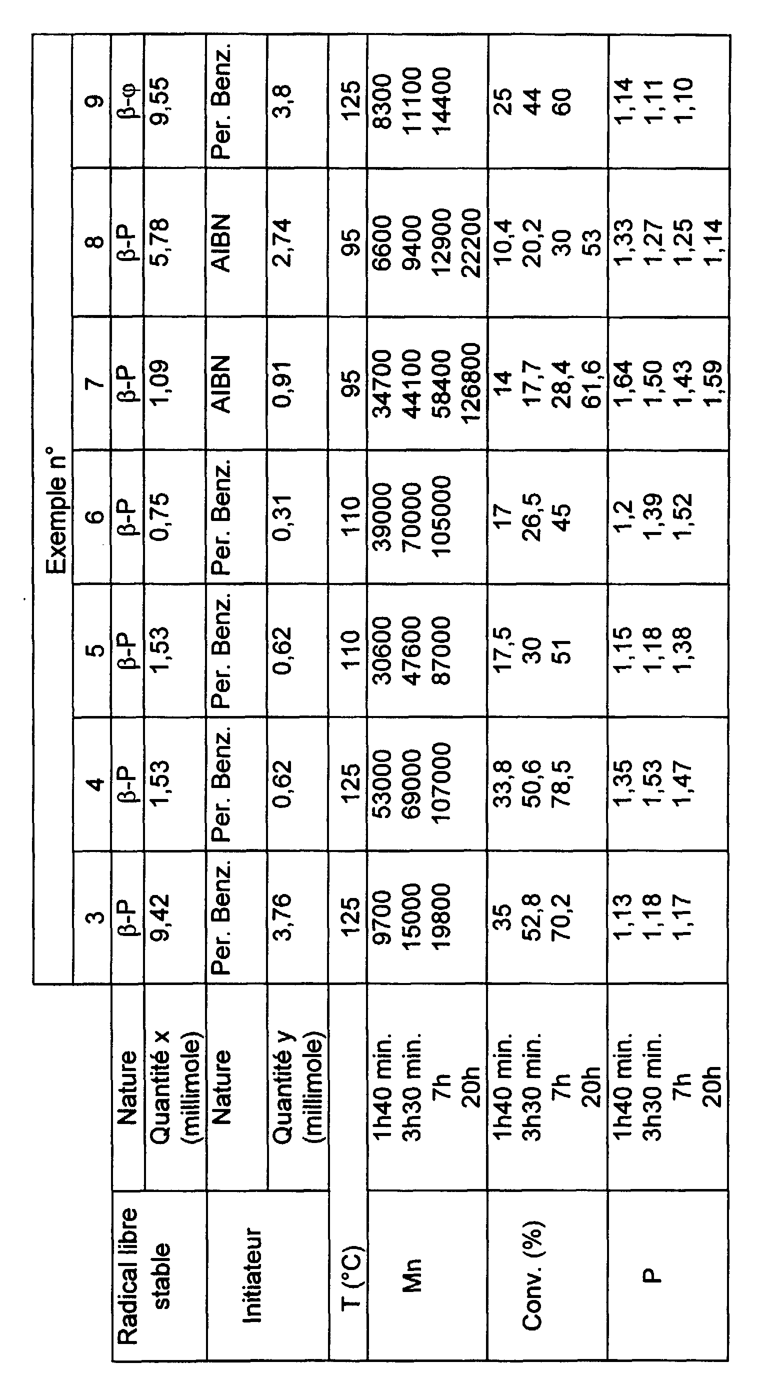

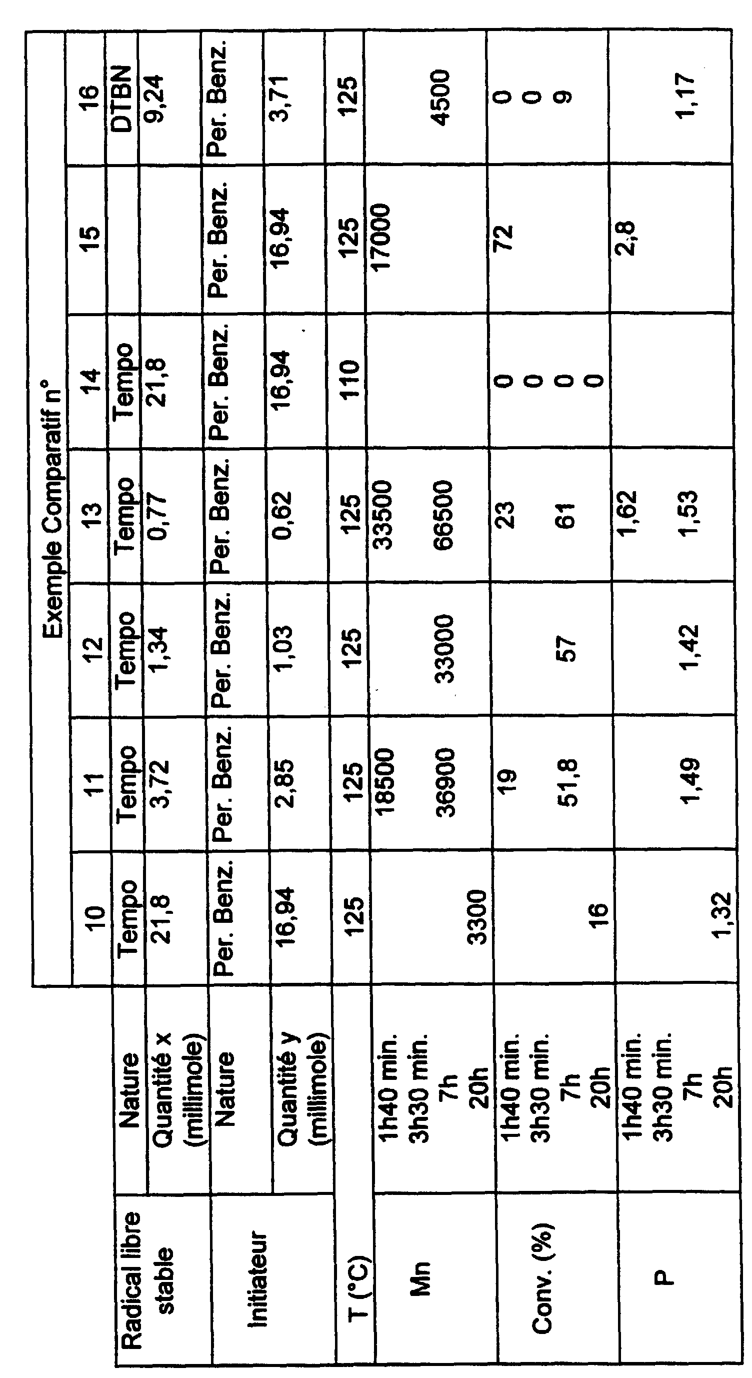

## Revendications

1. Procédé de polymérisation ou copolymérisation d'au moins un monomère polymérisable par voie radicalaire en présence d'un radical libre stable comprenant un enchaînement de formule 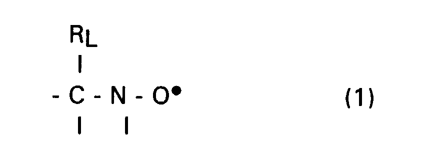 dans laquelle le radical R_{L} présente une masse molaire supérieure à 15, caractérisé en ce que R_{L} comprend un groupement phosphoryle.

2. Procédé de polymérisation ou copolymérisation d'au moins un monomère polymérisable par voie radicalaire en présence d'un radical libre stable comprenant un enchaînement de formule 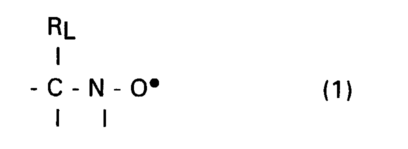 dans laquelle le radical R_{L} présente une masse molaire supérieure à 15, caractérisé en ce qu'il est conduit avec un taux de conversion de monomère en polymère ou copolymère supérieur à 50 % et à une température et une durée suffisante pour mener à un polymère ou copolymère de masse moléculaire moyenne en poids supérieure à 10 000.

3. Procédé selon la revendication 1 ou 2 caractérisé en ce que R_{L} peut être représenté par la formule 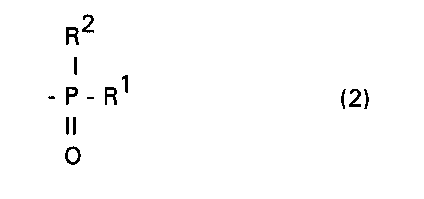 dans laquelle R1 et R2, pouvant être identiques ou différents, sont choisis parmi les halogènes, les radicaux alkyle, cycloalkyle, alkoxyle, aryloxyle, aryle, aralkyloxyle, perfluoroalkyle, aralkyle.

4. Procédé selon la revendication 3 caractérisé en ce que R1 et R2 comprennent de un à 20 atomes de carbone.

5. Procédé selon la revendication 3 ou 4 caractérisé en ce que le radical libre stable est le N-tertiobutyl-1-diéthylphosphono-2,2-diméthylpropylnitroxyde.

6. Procédé selon la revendication 2 caractérisé en ce que R_{L} comprend au moins un cycle aromatique.

7. Procédé selon la revendication 6 caractérisé en ce que R_{L} est un radical phényle.

8. Procédé selon la revendication 7 caractérisé en ce que le radical libre stable est le N-tertiobutyl-1-phényl-2-méthyl propyl nitroxyde.

9. Procédé selon l'une des revendications 1 à 8 caractérisé en ce que R_{L} présente une masse molaire supérieure à 30.

10. Procédé selon la revendication 9 caractérisé en ce que R_{L} présente une masse molaire comprise entre 40 et 450.

11. Procédé selon l'une des revendications 1 à 10 caractérisé en ce que les valences restantes de l'atome de carbone et de l'atome d'azote de la formule (1) sont liées à des radicaux monovalents.

12. Procédé selon l'une des revendications 1 à 11 caractérisé en ce que le radical libre stable est présent à raison de 0,005 % à 5 % en poids de la somme de la masse de monomère polymérisable et de radical libre stable.

13. Procédé selon l'une des revendications 1 à 12 caractérisé en ce qu'un initiateur de radicaux libres est présent.

14. Procédé selon la revendication 13 caractérisé en ce que l'initiateur de radicaux libres est présent à raison de 50 à 50 000 ppm sur la base de la masse de monomère polymérisable.

15. Procédé selon l'une des revendications 1 à 14 caractérisé en ce qu'il mène à des polymères ou copolymères de masse moléculaire moyenne en poids allant de 100 000 à 400 000.

16. Procédé selon l'une des revendications précédentes caractérisé en ce que au moins un monomère est acrylique ou méthacrylique.

17. Procédé selon l'une des revendications 1 à 16 caractérisé en ce que au moins un monomère polymérisable est vinylaromatique.

18. Procédé selon la revendication 17 caractérisé en ce que au moins un monomère vinylaromatique est le styrène.

19. Procédé selon l'une des revendications 1 à 18 caractérisé en ce que la température est comprise entre 90 et 120°C.

20. Procédé selon la revendication 19 caractérisé en ce que la température est comprise entre 100 et 120°C.

21. Procédé selon l'une des revendications 1 à 18 caractérisé en ce que la température est comprise entre 120 et 200°C.

22. Procédé selon l'une des revendications 17 à 21 caractérisé en ce que le milieu de polymérisation ou copolymérisation comprend également un caoutchouc, ledit procédé menant à un polymère vinylaromatique choc.

23. Procédé selon la revendication précédente caractérisé en ce que le caoutchouc est un ou plusieurs polybutadiènes.

## Claims

1. Process for the polymerization or copolymerization of at least one monomer which is polymerizable by the radical route in the presence of a stable free radical comprising a sequence of formula 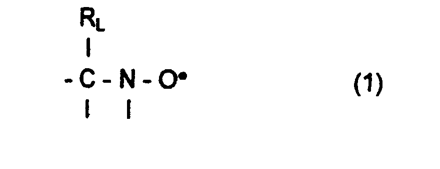 in which the R_{L} radical has a molar mass greater than 15, characterized in that R_{L} comprises a phosphoryl group.

2. Process for the polymerization or copolymerization of at least one monomer which is polymerizable by the radical route in the presence of a stable free radical comprising a sequence of formula 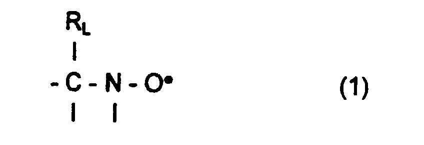 in which the R_{L} radical has a molar mass greater than 15, characterized in that it is carried out with a degree of conversion of monomer to polymer or copolymer of greater than 50% and at a temperature and a duration sufficient to result in a polymer or copolymer with a weight-average molecular mass of greater than 10,000.

3. Process according to Claim 1 or 2, characterized in that R_{L} can be represented by the formula 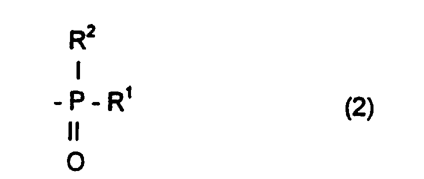 in which R¹ and R², which can be identical or different, are chosen from halogens or alkyl, cycloalkyl, alkoxy, aryloxy, aryl, aralkyloxy, perfluoroalkyl or aralkyl radicals.

4. Process according to Claim 3, characterized in that R¹ and R² comprise from one to 20 carbon atoms.

5. Process according to Claim 3 or 4, characterized in that the stable free radical is tert-butyl 1-diethylphosphono-2,2-dimethylpropyl nitroxide.

6. Process according to Claim 2, characterized in that R_{L} comprises at least one aromatic ring.

7. Process according to Claim 6, characterized in that R_{L} is a phenyl radical.

8. Process according to Claim 7, characterized in that the stable free radical is tert-butyl 1-phenyl-2-methylpropyl nitroxide.

9. Process according to one of Claims 1 to 8, characterized in that R_{L} has a molar mass greater than 30.

10. Process according to Claim 9, characterized in that R_{L} has a molar mass of between 40 and 450.

11. Process according to one of Claims 1 to 10, characterized in that the remaining valencies of the carbon atom and of the nitrogen atom of the formula (1) are bonded to monovalent radicals.

12. Process according to one of Claims 1 to 11, characterized in that the stable free radical is present in the proportion of 0.005% to 5% by weight of the sum of the mass of polymerizable monomer and of stable free radical.

13. Process according to one of Claims 1 to 12, characterized in that a free-radical initiator is present.

14. Process according to Claim 13, characterized in that the free-radical initiator is present in the proportion of 50 to 50,000 ppm based on the mass of polymerizable monomer.

15. Process according to one of Claims 1 to 14, characterized in that it results in polymers or copolymers with a weight-average molecular mass ranging from 100,000 to 400,000.

16. Process according to one of the preceding claims, characterized in that at least one monomer is acrylic or methacrylic.

17. Process according to one of Claims 1 to 16, characterized in that at least one polymerizable monomer is vinylaromatic.

18. Process according to Claim 17, characterized in that at least one vinylaromatic monomer is styrene.

19. Process according to one of Claims 1 to 18, characterized in that the temperature is between 90 and 120°C.

20. Process according to Claim 19, characterized in that the temperature is between 100 and 120°C.

21. Process according to one of Claims 1 to 18, characterized in that the temperature is between 120 and 200°C.

22. Process according to one of Claims 17 to 21, characterized in that the polymerization or copolymerization mixture also comprises a rubber, the said process resulting in a high-impact vinylaromatic polymer.

23. Process according to the preceding claim, characterized in that the rubber is one or a number of polybutadienes.

## Patentansprüche

1. Verfahren zur radikalischen Polymerisation oder Copolymerisation von mindestens einem polymerisierbaren Monomeren in Anwesenheit eines freien, stabilen Radikals, enthaltend eine Gruppierung der Formel 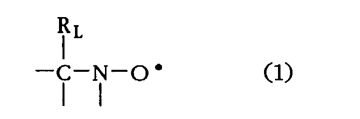 worin die Gruppe R_{L} eine Molmasse von mehr als 15 besitzt, dadurch gekennzeichnet, daß R_{L} eine Phosphorylgruppe aufweist.

2. Verfahren zur radikalischen Polymerisation oder Copolymerisation von mindestens einem polymerisierbaren Monomeren in Anwesenheit eines freien, stabilen Radikals, enthaltend eine Gruppierung der Formel 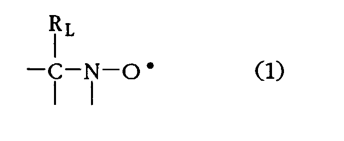 worin die Gruppe R_{L} eine Molmasse von mehr als 15 besitzt, dadurch gekennzeichnet, daß es mit einem Umsetzungsgrad von Monomer zu Polymer oder Copolymer von mehr als 50 % bei einer Temperatur und mit einer Dauer durchgeführt wird, die ausreicht, um ein Polymer oder Copolymer mit einer mittleren Molmasse von mehr als 10.000 zu erhalten.

3. Verfahren nach Anspruch oder 2, dadurch gekennzeichnet, daß R_{L} durch die Formel 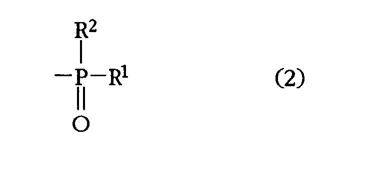 dargestellt werden kann, in der R¹ und R², die gleich oder verschieden sein können, aus den Halogenen und Alkyl-, Cycloalkyl-, Alkoxy-, Aryloxy-, Aryl, Aralkyloxy-, Perfluoralkyl-, Aralkylresten ausgewählt sind.

4. Verfahren nach Anspruch 3, dadurch gekennzeichnet, daß R¹ und R² ein bis 20 Kohlenstoffatome enthalten.

5. Verfahren nach Anspruch 3 oder 4, dadurch gekennzeichnet, daß das freie, stabile Radikal N-Tertiobutyl-1-diethylphosphono-2,2-dimethylpropylnitroxid ist.

6. Verfahren nach Anspruch 2, dadurch gekennzeichnet, daß R_{L} wenigstens einen aromatischen Ring enthält.

7. Verfahren nach Anspruch 6, dadurch gekennzeichnet, daß R_{L} ein Phenylrest ist.

8. Verfahren nach Anspruch 7, dadurch gekennzeichnet, daß das freie, stabile Radikal N-Tertiobutyl-1-phenyl-2-methylpropylnitroxid ist.

9. Verfahren nach einem der Ansprüche 1 bis 8, dadurch gekennzeichnet, daß R_{L} eine Molmasse über 30 aufweist.

10. Verfahren nach Anspruch 9, dadurch gekennzeichnet, daß R_{L} ein Molekulargewicht zwischen 40 und 450 aufweist.

11. Verfahren nach einem der Ansprüche 1 bis 10, dadurch gekennzeichnet, daß die restlichen Valenzen des Kohlenstoff- und des Stickstoffatoms der Formel (1) an einwertige Reste gebunden sind.

12. Verfahren nach einem der Ansprüche 1 bis 11, dadurch gekennzeichnet, daß das freie, stabile Radikal in einer Menge von 0,005 bis 5 Gew.-%, bezogen auf die Summe der Masse des polymerisierbaren Monomeren und des freien, stabilen Radikals, vorhanden ist.

13. Verfahren nach einem der Ansprüche 1 bis 12, dadurch gekennzeichnet, daß ein Initiator von freien Radikalen vorhanden ist.

14. Verfahren nach Anspruch 13, dadurch gekennzeichnet, daß der Initiator der freien Radikale in einer Menge von 50 bis 50.000 ppm auf der Grundlage der Masse des polymerisierbaren Polymers vorhanden ist.

15. Verfahren nach einem der Ansprüche 1 bis 14, dadurch gekennzeichnet, daß es zu Polymeren oder Copolymeren einer mittleren Molmasse zwischen zwischen 100.000 und 400.000 führt.

16. Verfahren nach einem der vorhergehenden Ansprüche, dadurch gekennzeichnet, daß mindestens ein Monomeres, ein Acryl- oder Methacrylmonomeres ist.

17. Verfahren nach einem der Ansprüche 1 bis 16, dadurch gekennzeichnet, daß mindestens ein polymerisierbares Monomeres vinylaromatisch ist.

18. Verfahren nach Anspruch 17, dadurch gekennzeichnet, daß mindestens ein vinylaromatisches Monomeres Styrol ist.

19. Verfahren nach einem der Ansprüche 1 bis 18, dadurch gekennzeichnet, daß die Temperatur zwischen 90 und 120 °C liegt.

20. Verfahren nach Anspruch 19, dadurch gekennzeichnet, daß die Temperatur zwischen 100 und 120 °C liegt.

21. Verfahren nach einem der Ansprüche 1 bis 18, dadurch gekennzeichnet, daß die Temperatur zwischen 120 und 200 °C liegt.

22. Verfahren nach einem der Ansprüche 17 bis 21, dadurch gekennzeichnet, daß der Polymerisations- oder Copolymerisationsansatz auch einen Kautschuk enthält, wobei das Verfahren zu einem schlagzähen vinylaromatischen Polymeren führt.

23. Verfahren nach dem vorhergehenden Anspruch, dadurch gekennzeichnet, daß der Kautschuk ein oder mehrere Polybutadiene ist.
